# EUROPEAN PATENT SPECIFICATION

(11) **EP 4 411 676 B1**
(45) Date of publication and mention of the grant of the patent: **31.12.2025**
(21) Application number: 23154972.6
(22) Date of filing: 03.02.2023
(51) Int. Cl.: G06V 40/16, G06V 40/40, G06V 40/50, G07C 9/37, G07C 9/38

(54) **DATABASE ENROLMENT SYSTEM**
DATENBANKERFASSUNGSSYSTEM
SYSTÈME D'INSCRIPTION DE BASE DE DONNÉES

(43) Date of publication of application: 07.08.2024
(73) Proprietor: Innovative Technology Limited, Oldham, Lancashire OL1 4EQ (GB)
(72) Inventor: BELLIS, David, Oldham (GB)
(74) Representative: Mewburn Ellis LLP

(56) References cited:
- EP-A1- 3 779 777
- US-A1- 2018 061 158

## Description

### Field of the Invention

The present invention relates to a database enrolment system for enrolling an unauthorised person in a database of authorised persons.

### Background

Many products or services are age-restricted to prevent customers who are too young from buying or using them (for example alcohol, knives, poisons, lottery tickets, movies, casinos). It is a legal requirement for vendors to ensure that customers are old enough to purchase age restricted products or services. Face recognition systems are known that can predict the age of a customer which can be used to automatically authorise a person to buy a restricted product or service.

However, sometimes a customer may look younger than their true age. When this happens an authorised person may be required to manually verify the customer's age. On subsequent visits to the same premises, an authorised person will be required to manually verify the same customer's age which can be inconvenient and inefficient. Face recognition systems which include a database of authorised persons may be used to recognise such persons as pre-authorised to buy the age restricted product or service.

Such face recognition systems for recognising authorised persons may also be used to authorise access to a restricted area. An example of such an application is a camera system located next to an entrance to a building or a secure area. The camera system may be directly linked to a processing unit that can access a database of authorised persons. The system may permit ingress by an individual into the building or secure area when said individual is identified as an existing database member.

However, enrolment of unauthorised persons in such a database typically requires an authorised person to manually enrol the unauthorised person. This enrolment procedure can involve a lengthy procedure to formally photograph the unauthorised person and add their information to the database.

US 2018/061158 A1 proposes various arrangements for determining and setting an authorization level for an unknown person. GB2586242B proposes a method of entering a facial image of an individual into a database of recognised and authorised individuals. The method in GB2586242B includes determining whether an image contains a facial image of an authorised first individual and a second individual, detecting a security gesture in the image being made by the first individual, and then entering the facial image of the second individual to the database.

The present invention has been devised in light of the above considerations.

### Summary of the Invention

In a first aspect of the present invention there is provided a database enrolment system for enrolling an unauthorised person in a database of authorised persons according to claim 1..

According to embodiments of the first aspect, an authorised person may simply and efficiently request enrolment of an unauthorised person in the database by standing next to the unauthorised person in the field of view of the camera and then moving to a second position by trading places with the unauthorised person.

Advantageously, the database enrolment system of the first aspect increases accuracy of the enrolment system by reducing the likelihood of erroneous entries into the database. By requiring the detection of an unauthorised person and an authorised person in the initialisation scene and then the detection of the same unauthorised person and authorised person in a scene in swapped positions, the likelihood of misinterpreting an enrolment request is reduced compared to conventional systems which analyse single images. This may improve usability and efficiency of the enrolment system because manual intervention from users is less likely to be required to correct erroneous entries into the database. In addition, the database enrolment system may be more resistant to intentional or unintentional false requests for entries into the database because the expected sequence of events (i.e. the detection of an authorised face and an unauthorised face in swapped positions) must be detected in two subsequent scenes.

Using the face recognition system to detect the face of an authorised person and the face of an unauthorised person in the field of view may comprise: detecting a first face in the field of view and classifying the first face as authorised or unauthorised by comparing the first face to the information in the database, and detecting a second face in the field of view and classifying the second face as authorised or unauthorised by comparing the second face to the information in the database.

Detecting the subsequent confirmation scene may comprise comparing the faces detected in the initialisation scene to the faces detected in the confirmation scene, and determining if the same first and second faces are detected in the second image.

The camera may be configured to film or video the field of view whereby multiple images of the field of view are captured at a predetermined frame rate. In other examples, the camera may be configured to take images which are stills captured a predetermined time apart or upon receipt of a command to capture an image. The initialisation scene is contained in a first image or frame received by the processing unit from the camera and the confirmation scene is contained in a second image or frame received by the processing unit from the camera.

The enrolment routine may comprise receiving one or more intermediate images or frames of the field of view containing intermediate scenes between detecting the initialisation scene and detecting the confirmation scene. In this way, the system is configured to allow the authorised person and the unauthorised person time to swap places before confirming enrolment of the unauthorised person. The system may be configured to provide a predetermined time between detecting the initialisation scene and detecting the confirmation scene during which the users are instructed by the system to change places to confirm enrolment.

Detecting the initialisation scene comprises using the face recognition subsystem to detect the face of the unauthorised person and the face of the authorised person in the field of view, wherein the face of the authorised person is detected on a first side of the field of view and the face of the authorised person is detecting on a second side of the field of view. Detecting the confirmation scene comprises using the face recognition subsystem to detect the face of the unauthorised person and the face of the authorised person in the field of view, wherein the face of the authorised person is detected on the second side of the field of view and the face of the authorised person is detected on the first side of the field of view.

The first side of the field of view may be a half of an image of the field of view separated from a second half of the image of the field of view by a centre line. The first and second halves may be left and right halves of the field of view. In this example, the authorised and unauthorised persons must move to from one side of the field of view to the other in order to enrol the unauthorised user in the database. In this way, the detection of erroneous enrolment requests may be reduced because both the authorised user and the unauthorised user must move to trigger the enrolment.

The database enrolment system may further comprise an indicator unit configured to indicate commands and/or a current status of the system to the authorised person and/or the unauthorised person. The indicator may comprise any one or more of: a graphical display or screen, a lighting system, for example an LED or LEDs, or an audio source.

The enrolment routine may comprise using the indicator unit to indicate when the initialisation scene is detected. In this example, the indicator unit may also be configured to instruct the authorised person and the unauthorised person to swap places when the initialisation scene is detected.

The enrolment routine may comprise using the indicator unit to indicate when the confirmation scene is detected. In some embodiments, the enrolment routine may comprise indicating to a user, with the indicator unit, when the unauthorised user has been enrolled in the database of authorised persons. In this way, the users may be informed when to trade places and when the system has determined that an enrolment request has been received.

In some examples, the enrolment routine may comprise using the indicator unit to indicate when the enrolment routine has entered a failure mode i.e., when the enrolment routine has not been successfully completed and the confirmation scene has not been successfully detected. For example, a failure mode may include any failure mode disclosed herein such as: a timer reaching a predetermined time limit for detection of the confirmation scene, detection of too many faces the field of view, detection of a false face in the field of view. For example, if a failure mode is detected then an LED may flash or change colour (e.g. red), a buzzer may sound, or a message may be displayed on a screen.

When the indicator unit includes a screen, the screen may be configured to display the field of view of the camera wherein faces in the field of view detected by the face recognition subsystem are highlighted in the field of view on the screen. For example, the face detected by the face recognition subsystem may be displayed on the screen inside a box. The face of the authorised person and the face of the unauthorised person may be displayed inside colour codes squares. For example, an authorised person may be shown in a green square and an unauthorised person may be shown in a red square.

The database enrolment system may comprise a user interface configured to receive user commands. The user interface may include the indicator unit. For example, the user interface may be a graphical user interface included in a display. The display may include a touch screen or buttons or a keyboard for receiving user commands.

When the database enrolment system comprises a user interface, the enrolment routine may comprise requesting confirmation of enrolment from an authorised person when the confirmation scene is detected. The unauthorised person may be enrolled in the database upon receipt of a confirmation of enrolment at the user interface. In this way, the likelihood of false enrolments to the database may be reduced.

In other examples, the processing unit may be further configured to recognise gestures made by persons in the field of view. The processing unit may be configured to recognise a predetermined gesture performed by the authorised person to confirm enrolment of the unauthorised person. In this way, the likelihood of false enrolments to the database may be reduced without requiring an authorised person to manually enter a password.

The enrolment routine may comprise determining if the authorised person is permitted to enrol unauthorised persons in the database. The enrolment routine may comprise transmitting the information relating the face classified as unauthorised to the database for enrolment only if the if the authorised person is determined as permitted to enrol unauthorised persons.

For example, the enrolment routine may comprise: requesting confirmation of enrolment by requesting a user (who may be the authorised person or a third party) to enter a password into the user interface, and transmitting the enrolment information to the database when the password has been entered. In another example, the enrolment routine may comprise: requesting confirmation of enrolment by requesting the user (who may be the authorised person or a third party) to scan a tag.

The enrolment routine may comprise requesting a user (who may be the authorised person or a third party) to indicate that they are permitted to authorise enrolment of the unauthorised person in the database by entering a password or scanning a tag. The status of the authorised person as permitted to authorise enrolment into the database of authorised persons may be stored in the database as an attribute of the authorised person designating that authorised person as an administrator. The database may further comprise information relating to the faces of administrators who are authorised persons permitted to enrol unauthorised persons in the database. In these examples, the enrolment routine may comprise: determining if the authorised person is an administrator permitted to enrol unauthorised persons in the database and transmitting the enrolment information to the database if the authorised person is determined to be an administrator.

The enrolment routine may comprise enrolling an administrator in the database by detecting an identifiable token or tag in the field of view and the face of a person holding the identifiable token or tag. In this example, the enrolment routine may comprise transmitting enrolment information relating to the face of person holding the token to the database for enrolment as an administrator. Other methods may also be used to enrol administrators in the database, For example, a separate back-end system may be used to enrol administrators in the database.

In some examples, detecting the initialisation scene may comprise determining if the authorised person is an administrator. Therefore, in this case the enrolment routine will not proceed to detect a confirmation scene until a face of and administrator is detected first.

The database may comprise information relating to the faces of administrators who are authorised persons permitted to enrol unauthorised persons in the database; and the enrolment routine may comprise: determining if the authorised person is an administrator by comparing the face of the authorised person to the information in the database.

By requiring the presence of an administrator to be confirmed or detected, the database enrolment system may have increased security because it is only configured to allow permitted persons (administrators) to enrol unauthorised persons into the database. This is more secure because even if a password or tag is required to confirm entry to the database, the administrator must also be present and recognised by the system.

The processing unit may be configured to begin a timer when the initialisation scene is detected. The enrolment routine may comprise transmitting the enrolment information to the database if the initialisation scene and the confirmation scene are detected while the time is within a predetermined enrolment time limit.

In this way, users of the system may decide not to enrol an unauthorized person in the database by simply walking away and not trading places. This helps to reduce the likelihood of false enrolments in the database where faces may be detected as having swapped places after a long time has passed by chance or in crowded locations.

The predetermined enrolment time limit may be adjustable, for example via a user interface.

In some examples, an initialisation scene may be detected multiple times while an authorised person and an unauthorised person stand in the field of view. The enrolment routine may comprise starting the timer after detection of final initialisation scene in a sequence of initialisation scenes. In other words, the processing unit may be configured to restart the timer upon detection of an initialisation scene wherein the authorised person is detected on the first side of the unauthorised person.

In examples, wherein the system includes an indicator unit, the indicator unit may be configured to indicate to the users that the timer has been started. For example, a light may flash each second. The indicator unit may be configured to display on a graphical display a time remaining on the timer until the predetermined enrolment time limit elapses.

The processing unit may be configured to use the face recognition subsystem to detect additional faces which belong to people other than the authorised person and the unauthorised person. The processing unit may be configured to restart the enrolment routine upon detection of an additional face in the field of view.

The enrolment routine may comprise: detecting a surplus face in the initialisation scene or in the confirmation scene, and when the surplus face is detected, restarting the enrolment routine. The surplus face may be a third face which belongs to a person who is not the authorised person or the unauthorised person and is simultaneously present in the field of view with the face of the authorised person and the face of the unauthorised person. By detecting surplus face / faces in the field of view the likelihood of erroneous enrolments of incorrect persons to the database may be reduced. This is particularly useful when the system is being used in a crowded location.

The database enrolment system may be configured to indicate that a surplus face has been detected in the field of view using an indicator unit. For example, the indicator unit may comprise an LED which is configured to flash if a surplus face has been detected in the field of view. In this way, users may be informed that enrolment is not possible because someone else is standing in the field of view.

The enrolment routine may comprise detecting an abort scene, wherein detecting the abort scene includes: using the face recognition subsystem to detect a third face in the field of view, and when the abort scene is detected, restarting the enrolment routine. The abort scene may be an intermediate scene or an intermediate image of the field of view which is received after the initialisation scene is detected and before the confirmation scene is detected. By detecting different faces in the field of view after detection of the initialisation scene, the system may be able to detect when new users are attempting to use the enrolment system before a previous enrolment routine was completed. This may also reduce the likelihood of false enrolments requests being detected in crowded locations.

The enrolment routine may comprise using the indicator unit to indicate to a user if an abort scene has been detected. For example, the indicator unit may comprise an LED which is configured to flash if an abort scene has been detected. In other examples, the indicator unit may comprise a screen which is configured to display a message indicating that too many faces are present in the field of view if an abort scene is detected.

The processing unit may be configured to detect and track the authorised person and the unauthorised person in the field of view between the initialisation scene and the confirmation scene. Tracking the authorised person and the unauthorised person in may comprised using the face recognition subsystem detect the faces of the authorised persons in intermediate scenes contained in images of the field of view which are received from the camera after detection of the initialisation scene. In some examples, tracking the authorised person and the unauthorised person may include using an object tracking algorithm to follow the movement of the authorised person and the unauthorised person between scenes. In this way each person may be tracked between scenes even if they look away from the camera.

The enrolment routine may comprise restarting the enrolment routine if the authorised person cannot be detected in one or more intermediate scenes contained in images of the field of view which are received from the camera after detection of the initialisation scene. This can reduce the likelihood of false enrolment requests being detected since the authorised person and the unauthorised person must remain in the field of view for the duration of the enrolment routine.

The facial recognition subsystem is configured to detect false faces (which may also be referred to as "spoof" faces) in the field of view. For example, the facial recognition subsystem may be configured to determine if a picture of a face (e.g. on a display or on paper) is present in the field of view. The processing unit may be configured to restart the enrolment routine when the face recognition subsystem detects a false face. The ability to detect false faces in the field of view may increase security of the enrolment system by preventing spoof enrolment requests being made by showing a picture of an unauthorised or authorised person to the camera.

The detection of false faces in the field of view may include any known spoof detection methods. For example, the detection may include "liveness detection" wherein movement of the facial features is detected. Other examples may include using stereo cameras to check that the face detected in the field of view is three dimensional.

The processing unit may be configured to determine a distance between the faces detected in the field of view from the camera. In such an embodiment, a face may only be classified as the authorised person or the unauthorised person, if the face is determined to be within a maximum threshold distance from the camera. In this way, the likelihood of erroneous enrolment requests being detected may be reduced in crowded locations because faces which are too far away from the camera cannot trigger the enrolment routine.

A face detected in the field of view may only be classified as the authorised person or the unauthorised person if the detected face is determined to be at least a minimum distance of the camera. This also may increase the accuracy of the enrolment system since people who are too close to the camera for accurate identification cannot trigger the enrolment routine.

In some examples, the enrolment routine may comprise removing an unauthorised person from the database.

For example, the enrolment routine may comprise: detecting an initialisation scene, wherein detecting the initialisation scene includes: using the face recognition subsystem to detect the face of a first authorised person in the field of view and to detect the face of a second authorised person in the field of view, wherein the face of the first authorised person is detected on a first side of the face of the second authorised person in the field of view; detecting a subsequent confirmation scene, wherein detecting the subsequent confirmation scene includes: using the face recognition subsystem to detect the face of the first authorised person and the face of the second authorised person in the field of view, wherein the face of the first authorised person is detected on a second side of the face of the second authorised person in the field of view; and when the initialisation scene and the confirmation scene are detected, transmitting information relating to the face of the second authorised person to the database for removal from the database as an authorised person. Specifically, after removal of the second authorised person from the database, the second authorised person would now be considered as an unauthorised person.

In this example, the first authorised person is preferably an administrator who is registered as a person with permissions to enrol unauthorised persons and remove unauthorised persons to / from the database.

Therefore, the enrolment routine may comprise determining that the first authorised person is an administrator, and detecting the initialisation scene, only if the first authorised person is an administrator.

In a further aspect of the present invention there is provided a computer implemented method of enrolling an unauthorised person in a database of authorised persons using an enrolment routine, wherein the enrolment routine comprises: receiving an image of a field of view from a camera; detecting an initialisation scene, wherein detecting the initialisation scene includes: using a face recognition subroutine to detect the face of an authorised person and the face of an unauthorised person in the field of view, wherein the face of the authorised person is positioned in the field of view on a first side of the face of the unauthorised person; detecting a subsequent confirmation scene, wherein detecting the subsequent confirmation scene includes: using the face recognition subroutine to detect the face of the authorised person and the face of the unauthorised person in the field of view, wherein the face of the authorised person is positioned in the field of view on a second side of the face of the unauthorised person; and when the initialisation scene and the confirmation scene are detected, transmitting enrolment information relating to the face of the unauthorised person to the database for enrolment as an authorised person.

The computer implemented method of the second aspect may comprise any of the optional features of the enrolment routine described herein for the first aspect of the present invention.

Additional aspects of the invention may relate to systems configured to execute the computer-implemented method of the second aspect of the invention. Specifically, the system may comprise a processor which is configured to execute the respective computer-implemented methods of the second aspect of the invention.

Additional aspects of the invention may provide a computer program comprising instructions which, when the program is executed by a computer, cause the computer to carry out the steps of a computer-implemented method of the second aspect of the present invention. Further aspects of the invention may provide a computer-readable storage medium, having stored thereon the computer program of the previous aspects of the invention.

### Summary of the Figures

Embodiments and experiments illustrating the principles of the invention will now be discussed with reference to the accompanying figures in which:

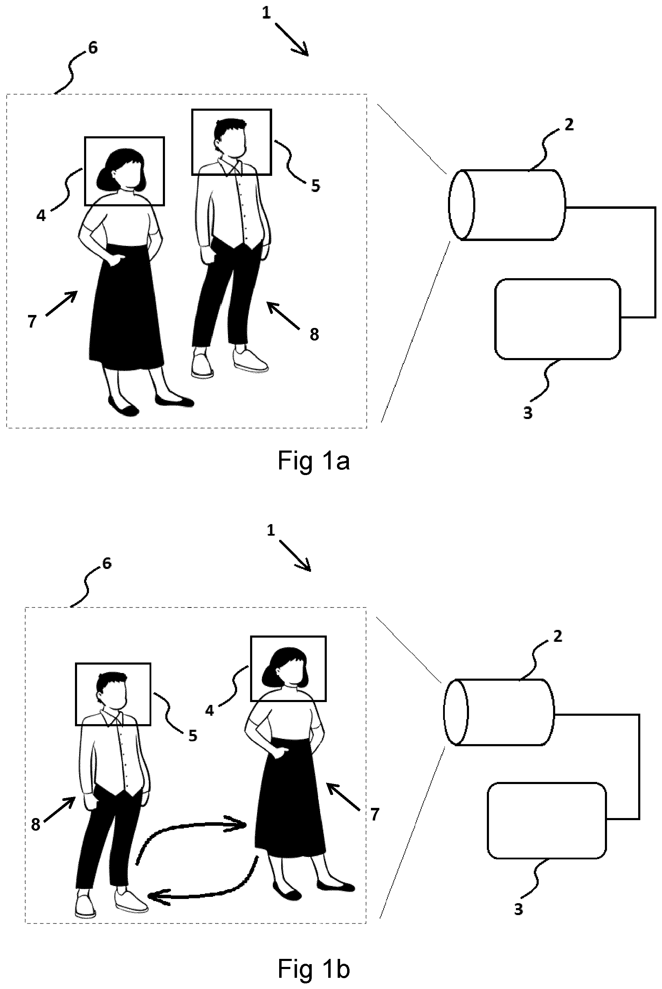

**Figure 1a and 1b** show an unauthorised person being enrolled in a database of authorised persons using a database enrolment system according to the present invention.

### Detailed Description of the Invention

Aspects and embodiments of the present invention will now be discussed with reference to the accompanying figures.

Figs. 1a and 1b show an unauthorised person 8 being enrolled in a database of authorised persons using a database enrolment system 1 according to the present invention.

The database enrolment system 1 comprises a camera 2 for capturing images and a processing unit 3 for analysing the images. The processing unit 3 is communicably coupled to a database of authorised persons and is configured to perform an enrolment routine, whereby an unauthorised person is enrolled in the database as an authorised person, if a specific series of events is detected in the images. The specific series of events includes the authorised person 7 and unauthorised person 8 being detected and then swapping places in the field of view 6.

The camera 2 is configured to capture images of people and objects positioned in a field of view 6 of the camera 2 and transmit the images to the processing unit 3. The camera 2 is configured to capture a live stream of the field of view 6 wherein multiple images of the field of view 6 are captured at a predetermined frame rate and continuously transmitted to the processing unit 3. In other examples the camera 2 may be configured to take images which are stills captured a predetermined time apart or upon command by the processing unit 3.

The database contains information relating to the faces of authorised persons. In some examples, the database may comprise pictures of the faces of authorised persons and information about each person. In other examples, the database may contain numerical features associated with the faces of the authorised persons.

The processing unit 3 comprises a face recognition subsystem for detecting and identifying faces in the field of view 6. The processing unit 3 is configured to use the face recognition subsystem to identify when an authorised person 7 and unauthorised person 8 are present in the field of view 6 and perform the enrolment routine to determine if the specific series of events is detected in the images. If the specific series of events is detected in the images, the unauthorised person 8 is enrolled in the database as an authorised person.

The face recognition subsystem preferably includes an artificial neural network that is designed to recognise one or more faces in the camera field of view. Once a face or face(s) are detected in an image the exact location of the face stored (defined by pixel location) and any further processing may now be performed on each portion of the image containing a face.

The enrolment routine is described below in relation to Figs.1a and 1b.

In summary, the enrolment routine comprises detecting an initialisation scene wherein an authorised person 7 is detected on a first side of the unauthorised person 8 and detecting a subsequent confirmation scene wherein an authorised person 7 is detected on a second side of the unauthorised person 8. If both the initialisation scene and the confirmation scene are detected, enrolment information relating to the face of the unauthorised person 8 is transmitted to the database for enrolment as an authorised person 7.

In Fig. 1a, two users of the system are stood side-by-side in the field of view 6 of the camera 2. The camera 2 captures an image of the two users and transmits the image to the processing unit 3. The processing unit 3 then uses the face recognition subsystem to detect a first face 4 and a second face 5 in the image belonging to each of the users. When the first face 4 is positioned in the image on the left of the second face 5, the processing unit 3 proceeds to classify each of the first face 4 and the second face 5 as authorised or unauthorised by comparing the first face 4 and the second face 5 to the information in the database of authorised persons.

When one of the first 4 and second 5 faces is classified as authorised and the other of the first 4 and second 5 faces is classified as unauthorised, the image is classified by the processing unit 3 as an initialisation scene and the processing unit 3 starts a timer. An indicator unit (not shown) is used to indicate to the users that an authorised person 7 and an unauthorised person 8 have been detected in the field of view 6.

The indicator unit may comprise one or more LEDs to indicate a status of the system. In other examples, the system may comprise a screen and/or speaker for displaying instructions or emitting a sound. The display may display an image of the current field of view 6 wherein the first face 4 and second face 5 detected in the image are shown inside colour coded squares. For example, an authorised person 7 may be shown in a green square and an unauthorised person 8 may be shown in a red square.

After detecting the initialisation scene, the processing unit 3 analyses subsequent images to determine whether the same unauthorised person 8 and authorised person 7 are present and have swapped places.

In Fig.1b the two users of the system are stood side-by-side in the field of view 6 of the camera 2. However, relative to fig. 1a, in Fig.1b the users have swapped sides 7 so that the first face 4 is positioned on the right of the second face 5 .

When the processing unit 3 receives the subsequent images of the field of view 6 from the camera 2 the processing unit 3 uses the face recognition subsystem to detect the same first face 4 and the same second face 5 in the subsequent image. If the processing unit 3 has not detected the same first face 4 and the same second face 5 in the subsequent image, then the processing unit 3 will continue to analyse subsequent images for an image where this is the case.

If the processing unit 3 determines that the first face 4 and the second face 5 are present in a subsequent image, then the processing unit 3 determines whether the first face 4 is positioned on the right of the second face 5 (i.e. users of the system have swapped places). If the processing unit has not determined that the first face 4 and the second face 5 have swapped places then the processing unit 3 will continue to analyse subsequent images until an image is received where this is the case.

If the processing unit 3 determines that the first face 4 and the second face 5 have swapped places then the processing unit 3 classifies the image as containing a confirmation scene and requests confirmation from the users that the unauthorised person 8 should be enrolled in the database as an authorised person.

Confirmation may be received as a password being input into a user interface or by an authorised person 7 scanning a tag or barcode to authorise the enrolment. In other examples, a user may give confirmation of enrolment by performing a predetermined physical gesture in the field of view 6, which is recognised by the processing unit 3.

If the timer reaches a predetermined enrolment time limit (for example 10 seconds) and the processing unit 3 has not detected a confirmation scene then the processing unit 3 will restart the enrolment routine (i.e. the processing unit 3 will being analysing images received from the camera 2 for a new initialisation scene).

Additionally, if the processing unit 3 detects a surplus face in the field of view 6 which is not the first face 4 or the second face 5 the processing unit 3 may display a warning message and/or restart the enrolment routine. The surplus face may be detected in a same image as the first face 4 or the second face 5 or in any subsequent images received after detection of the initialisation scene.

In some examples, the processing unit 3 may be configured to detect an abort scene comprising a third face after the initialisation scene is detected and before the confirmation scene is detected. By detecting different faces in the field of view 6 after detection of the initialisation scene, the system may be able to detect when new users are attempting to use the enrolment system before the current enrolment routine is completed. If the processing unit 3 detects a third face in the field of view (i.e., an abort scene) then the processing unt 3 may display a warning message and/or abort and restart the enrolment routine. Additionally, the indicator unit may be used to indicate that an abort scene has been detected e.g., by flashing and LED or displaying a message explaining that an additional person has been detected in the field of view 6.

If the processing unit 3 receives confirmation that the unauthorised person 8 should be enrolled in the database, the processing unit 3 will transmit information relating the face of the unauthorised person 8 to the database for enrolment in the database as an authorised person.

After the unauthorised person 8 is enrolled in the database the indicator unit may indicate to the users that the operation is complete. For example, an LED may flash twice or switch from amber to green, or a chime may sound from a speaker to indicate that that the operation has been completed.

The indicator unit may also be configured to indicate if the operation has not been successfully completed. For example, if the enrolment operation fails e.g. because too many faces are detected in the field of view or if the timer has reached the predetermined time limit, then an LED may flash or turn red to indicate that the operation has not been completed. In other examples, a message may be displayed on a screen to with an error code or to explain why the operation has not been completed.

In some examples, the database may contain information relating to the faces of administrators who are authorised persons permitted to enrol unauthorised persons 8 in the database. For example, the administrators may be employees or managers in a shop. In this example, the processing unit 3 may only enrol the unauthorised person 8 in the database if the authorised person 7 is identified as an administrator.

Additionally the database may be configured to store additional information about the authorised persons. For example, when the authorised person 7 was enrolled. For example, the additional information may include information about when the authorised person was added to the database and who added them.

In some examples, the system 1 may be supplied with a token or tag for use by administrators to authorise enrolment of unauthorised people in the database. The token or tag may also be used to authorise a reset of the system 1 or to remove people from the database.

An administrator may be enrolled in the database by holding a visible token or tag in the field of view. In some instances the token or tag may be part of the system as whole. Alternatively, the token or tag may be, for example, an identification card, for example driving license or passport. In this example, the processing unit 3 may be configured to detect the identifiable token in the field of view 6 and the face of a person holding the token. The processing unit 3 may then transmit enrolment information relating to the face of person holding the token to the database for enrolment as an administrator. Other methods may also be used to enrol administrators in the database, For example, a separate back-end system may be used to enrol administrators in the database.

In some examples, an administrator may remove an authorised person from the database using the same process. For example, if the processing unit 3 determines that two faces in the field of view 6 comprise an administrator and an authorised person (i.e., a person who is already enrolled in the database) then a message may be displayed on the screen instructing the persons to swap places if they wish to remove the authorised person from the database.

If the processor detects subsequent images of the field of view 6 wherein the administrator and the authorised person have swapped sides, then the authorised person may be removed from the database. The authorised person would now be recognised by the system as an unauthorised person.

An example application for the database enrolment system 1 of Figs.1a and 1b is installation in a shop or business to identify and track customers who wish to purchase age-restricted goods or services. In this example, the camera 2 may be placed in a position to observe customers attempting to purchase the age-restricted goods or services. The processing unit 3 may then compare the faces of the customers being observed by the camera 2 to the faces of authorised persons stored in the database.

If a customer is not recognised as an authorised person, the processing unit 2 may use an age detection algorithm to determine if the customer appears old enough to buy the age-restricted goods or services. If the customer is not recognised as an authorised person and, optionally, does not look old enough, then a signal may be sent to an authorised person who is an administrator for the system 1 to check the customer's age, for example via checking of age-verifying document belonging to the customer.

If the authorised person 7 finds on checking a document of the customer, that the customer is old enough to purchase the age-restricted goods or services then the authorised person may enrol the customer in the database using the system 1 according to the above-described enrolment procedure. After enrolment the system can now recognise the same customer as an authorised person on subsequent visits to the shop or business.

In some examples, the database enrolment system 1 of Figs.1a and 1b may be used by a store (i.e., a shop, or supermarket) which is part of a chain of stores or supermarkets (or a similar collaboration of businesses which may share resources). In these examples, the database may be a remote or cloud based database which is accessible by each store in the chain. Therefore, a person may be enrolled in the database in one store and then be recognised as being enrolled in the database in another store which has access to the database.

Another example application of the database enrolment system 1 of Figs.1a and 1b may be for government or alternative business uses. For example, the system may be used to enrol a person in a job centre or a library.

Of course, other suitable applications of the database enrolment system 1 may be envisaged by the skilled person which may include a local, remote, or cloud based database.

The features disclosed in the foregoing description, or in the following claims, or in the accompanying drawings, expressed in their specific forms or in terms of a means for performing the disclosed function, or a method or process for obtaining the disclosed results, as appropriate, may, separately, or in any combination of such features, be utilised for realising the invention in diverse forms thereof.

For the avoidance of any doubt, any theoretical explanations provided herein are provided for the purposes of improving the understanding of a reader. The inventors do not wish to be bound by any of these theoretical explanations.

Any section headings used herein are for organizational purposes only and are not to be construed as limiting the subject matter described.

Throughout this specification, including the claims which follow, unless the context requires otherwise, the word "comprise" and "include", and variations such as "comprises", "comprising", and "including" will be understood to imply the inclusion of a stated integer or step or group of integers or steps but not the exclusion of any other integer or step or group of integers or steps.

It must be noted that, as used in the specification and the appended claims, the singular forms "a," "an," and "the" include plural referents unless the context clearly dictates otherwise. Ranges may be expressed herein as from "about" one particular value, and/or to "about" another particular value. When such a range is expressed, another embodiment includes from the one particular value and/or to the other particular value. Similarly, when values are expressed as approximations, by the use of the antecedent "about," it will be understood that the particular value forms another embodiment. The term "about" in relation to a numerical value is optional and means for example +/- 10%.

### References

A number of publications are cited above in order to more fully describe and disclose the invention and the state of the art to which the invention pertains. Full citations for these references are provided below. US 2018/061158 A1, GB2586242B

## Claims

1. A database enrolment system (1) for enrolling an unauthorised person in a database of authorised persons, wherein the system comprises:
a camera (2) for imaging a field of view (6),
a processing unit (3) in communication with the database of authorised persons and comprising a face recognition subsystem, wherein the database contains information relating to the faces of authorised persons,
wherein the processing unit is configured to perform an enrolment routine for enrolling an unauthorised person in the database, wherein the enrolment routine comprises:
detecting an initialisation scene, wherein detecting the initialisation scene includes: using the face recognition subsystem to detect the face (4) of an authorised person (7) in the field of view and to detect the face (5) of an unauthorised person (8) in the field of view, wherein the face of the authorised person is detected on a first side of the face of the unauthorised person in the field of view;
detecting a subsequent confirmation scene; and
when the initialisation scene and the confirmation scene are detected, transmitting enrolment information relating to the face of the unauthorised person to the database for enrolment as an authorised person; **characterised in that**:
detecting the subsequent confirmation scene includes: using the face recognition subsystem to detect the face of the authorised person and the face of the unauthorised person in the field of view, wherein the face of the authorised person is detected on a second side of the face of the unauthorised person in the field of view, the first and second sides being different sides of the face of the unauthorised person.

2. The database enrolment system of claim 1 wherein the enrolment routine comprises transmitting the enrolment information to the database if the initialisation scene and the confirmation scene are detected within a predetermined enrolment time limit.

3. The database enrolment system of claims 1 or 2 wherein the enrolment routine comprises detecting an abort scene, wherein detecting the abort scene includes:
using the face recognition subsystem to detect a third face in the field of view, and
when the abort scene is detected, restarting the enrolment routine.

4. The database enrolment system of any preceding claim wherein the processing unit is configured to detect and track the authorised person and the unauthorised person in the field of view between the initialisation scene and the confirmation scene.

5. The database enrolment system of any preceding claim wherein the enrolment routine comprises:
detecting a surplus face in the initialisation scene or in the confirmation scene, and
when the surplus face is detected, restarting the enrolment routine.

6. The database enrolment system of any preceding claim wherein the facial recognition subsystem is configured to detect false faces in the field of view.

7. The database enrolment system of any preceding claim further comprising an indicator unit configured to indicate commands and/or a current status of the database enrolment system to the authorised person or the unauthorised person.

8. The database enrolment system of claim 8 wherein the enrolment routine comprises using the indicator unit to indicate when the initialisation scene is detected and instruct the authorised person and unauthorised person to swap places.

9. The database enrolment system of claims 7 or 8 wherein the enrolment routine comprises using the indicator unit to indicate when the enrolment routine has entered a failure mode wherein the subsequent confirmation scene is not detected.

10. The database enrolment system of any of claims 7 to 9 wherein the indicator unit includes a screen configured to display the field of view of the camera, wherein faces in the field of view which are detected by the face recognition subsystem are displayed on the screen inside a box.

11. The database enrolment system of any of claims 7 to 10 wherein the enrolment routine comprises requesting confirmation of the enrolment from a user when the confirmation scene is detected.

12. The database enrolment system of claim 11 further comprising a user interface configured to receive user commands, wherein the enrolment routine comprises: requesting confirmation of enrolment by requesting the authorised person to enter a password into the user interface, and transmitting the enrolment information to the database when the password has been entered.

13. The database enrolment system of any preceding claim wherein the enrolment routine comprises: determining if the authorised person is an administrator permitted to enrol unauthorised persons in the database, and transmitting the enrolment information to the database if the authorised person is determined to be an administrator.

14. The database enrolment system of claim 13 wherein:
the database comprises information relating to the faces of at least one administrator who is / are authorised persons permitted to enrol unauthorised persons in the database; and
the enrolment routine comprises: classifying the face of the authorised person as an administrator by comparing the face of the authorised person to the information in the database.

15. A computer implemented method of enrolling an unauthorised person in a database of authorised persons using an enrolment routine, wherein the enrolment routine comprises:
receiving an image of a field of view from a camera;
detecting an initialisation scene, wherein detecting the initialisation scene includes: using a face recognition subroutine to detect the face of an authorised person and the face of an unauthorised person in the field of view, wherein the face of the authorised person is positioned in the field of view on a first side of the face of the unauthorised person;
detecting a subsequent confirmation scene; and
when the initialisation scene and the confirmation scene are detected, transmitting enrolment information relating to the face of the unauthorised person to the database for enrolment as an authorised person, **characterized in that**:
detecting the subsequent confirmation scene includes: using the face recognition subroutine to detect the face of the authorised person and the face of the unauthorised person in the field of view, wherein the face of the authorised person is positioned in the field of view on a second side of the face of the unauthorised person, the first and second sides being different sides of the face of the unauthorised person.

## Patentansprüche

1. Datenbankeintragungssystem (1) zum Eintragen einer unautorisierten Person in eine Datenbank von autorisierten Personen, wobei das System Folgendes umfasst:
eine Kamera (2) zum Abbilden eines Sichtfelds (6),
eine Verarbeitungseinheit (3), die in Kommunikation mit der Datenbank von autorisierten Personen steht und ein Gesichtserkennungssubsystem umfasst, wobei die Datenbank Informationen bezüglich der Gesichter autorisierter Personen enthält,
wobei die Verarbeitungseinheit konfiguriert ist, um eine Eintragungsroutine zum Eintragen einer unautorisierten Person in die Datenbank durchzuführen, wobei die Eintragungsroutine Folgendes umfasst:
Detektieren einer Initialisierungsszene, wobei das Detektieren der Initialisierungsszene Folgendes umfasst: Verwenden des Gesichtserkennungssubsystems zum Detektieren des Gesichts (4) einer autorisierten Person (7) im Sichtfeld und zum Detektieren des Gesichts (5) einer unautorisierten Person (8) im Sichtfeld, wobei das Gesicht der autorisierten Person auf einer ersten Seite des Gesichts der unautorisierten Person in dem Sichtfeld detektiert wird;
Detektieren einer darauffolgenden Bestätigungsszene; und
wenn die Initialisierungsszene und die Bestätigungsszene detektiert werden, Senden von Eintragungsinformationen bezüglich des Gesichts der unautorisierten Person an die Datenbank zum Eintragen als eine autorisierte Person; **dadurch gekennzeichnet, dass**:
das Detektieren der darauffolgenden Bestätigungsszene Folgendes umfasst: Verwenden des Gesichtserkennungssubsystems zum Detektieren des Gesichts der autorisierten Person und des Gesichts der unautorisierten Person im Sichtfeld, wobei das Gesicht der autorisierten Person auf einer zweiten Seite des Gesichts der unautorisierten Person im Sichtfeld detektiert wird, wobei die erste und die zweite Seite unterschiedliche Seiten des Gesichts der unautorisierten Person sind.

2. Datenbankeintragungssystem nach Anspruch 1, wobei die Eintragungsroutine das Senden der Eintragungsinformationen an die Datenbank umfasst, wenn die Initialisierungsszene und die Bestätigungsszene innerhalb einer vorbestimmten Eintragungszeitgrenze detektiert werden.

3. Datenbankeintragungssystem nach Anspruch 1 oder 2, wobei die Eintragungsroutine das Detektieren einer Abbruchszene umfasst, wobei das Detektieren der Abbruchszene Folgendes umfasst:
Verwenden des Gesichtserkennungssubsystems zum Detektieren eines dritten Gesichts im Sichtfeld und
wenn die Abbruchszene detektiert wurde, Neustarten der Eintragungsroutine.

4. Datenbankeintragungssystem nach einem der vorangegangenen Ansprüche, wobei die Verarbeitungseinheit konfiguriert ist, um die autorisierte Person und die unautorisierte Person im Sichtfeld zwischen der Initialisierungsszene und der Bestätigungsszene zu detektieren und zu verfolgen.

5. Datenbankeintragungssystem nach einem der vorangegangenen Ansprüche, wobei die Eintragungsroutine Folgendes umfasst:
Detektieren eines überzähligen Gesichts in der Initialisierungsszene oder in der Bestätigungsszene und
wenn das überzählige Gesicht detektiert wird, Neustarten der Eintragungsroutine.

6. Datenbankeintragungssystem nach einem der vorangegangenen Ansprüche, wobei das Gesichtserkennungsteilsystem konfiguriert ist, um falsche Gesichter im Sichtfeld zu detektieren.

7. Datenbankeintragungssystem nach einem der vorangegangenen Ansprüche, umfassend eine Indikator-Einheit, die konfiguriert ist, um Befehle und/oder einen aktuellen Status des Datenbankeintragungssystems für die autorisierte Person oder die unautorisierte Person anzugeben.

8. Datenbankeintragungssystem nach Anspruch 8, wobei die Eintragungsroutine das Verwenden der Indikator-Einheit umfasst, um anzugeben, wenn die Initialisierungsszene detektiert wird, und die autorisierte Person und die unautorisierte Person anzuweisen, miteinander Platz zu tauschen.

9. Datenbankeintragungssystem nach Anspruch 7 oder 8, wobei die Eintragungsroutine das Verwenden der Indikator-Einheit umfasst, um anzugeben, wenn die Eintragungsroutine in einen Fehlermodus eingetreten ist, wobei die darauffolgende Bestätigungsszene nicht detektiert wird.

10. Datenbankeintragungssystem nach einem der Ansprüche 7 bis 9, wobei die Indikator-Einheit einen Bildschirm umfasst, der konfiguriert ist, um das Sichtfeld der Kamera anzuzeigen, wobei Gesichter im Sichtfeld, die durch das Gesichtserkennungsteilsystem detektiert werden, auf dem Bildschirm innerhalb eines Kastens angezeigt werden.

11. Datenbankeintragungssystem nach einem der Ansprüche 7 bis 10, wobei die Eintragungsroutine das Anfordern einer Bestätigung der Eintragung von einem Benutzer umfasst, wenn die Bestätigungsszene detektiert wird.

12. Datenbankeintragungssystem nach Anspruch 11, ferner umfassend eine Benutzeroberfläche, die konfiguriert ist, um Benutzerbefehle zu empfangen, wobei die Eintragungsroutine Folgendes umfasst: Anfordern einer Bestätigung der Eintragung durch Auffordern der autorisierten Person, ein Passwort in die Benutzeroberfläche einzugeben, und Senden der Eintragungsinformationen an die Datenbank, wenn das Passwort eingegeben wurde.

13. Datenbankeintragungssystem nach einem der vorangegangenen Ansprüche, wobei die Eintragungsroutine Folgendes umfasst: Bestimmen, ob die autorisierte Person ein Administrator ist, der befugt ist, unautorisierte Personen in die Datenbank einzutragen, und Senden der Eintragungsinformationen an die Datenbank, wenn bestimmt wird, dass die autorisierte Person ein Administrator ist.

14. Datenbankeintragungssystem nach Anspruch 13, wobei:
die Datenbank Informationen bezüglich des Gesichts von zumindest einem Administrator, welcher eine autorisierte Person ist, die befugt ist, unautorisierte Personen in die Datenbank einzutragen, umfasst; und
die Eintragungsroutine Folgendes umfasst: Klassifizieren des Gesichts der autorisierten Person als einen Administrator durch Vergleichen des Gesichts der autorisierten Person mit den Informationen in der Datenbank.

15. Computerimplementiertes Verfahren zum Eintragen einer unautorisierten Person in einer Datenbank von autorisierten Personen unter Verwendung einer Eintragungsroutine, wobei die Eintragungsroutine Folgendes umfasst:
Empfangen eines Bilds einer Sichtfelds von einer Kamera;
Detektieren einer Initialisierungsszene, wobei das Detektieren der Initialisierungsszene Folgendes umfasst: Verwenden einer Gesichtserkennungssubroutine zum Detektieren des Gesichts einer autorisierten Person und des Gesichts einer unautorisierten Person im Sichtfeld, wobei das Gesicht der autorisierten Person in dem Sichtfeld auf einer ersten Seite des Gesichts der unautorisierten Person angeordnet wird;
Detektieren einer darauffolgenden Bestätigungsszene; und
wenn die Initialisierungsszene und die Bestätigungsszene detektiert werden, Senden von Eintragungsinformationen bezüglich des Gesichts der unautorisierten Person an die Datenbank zum Eintragen als eine autorisierte Person; **dadurch gekennzeichnet, dass**:
das Detektieren der darauffolgenden Bestätigungsszene Folgendes umfasst:
Verwenden der Gesichtserkennungssubroutine zum Detektieren des Gesichts der autorisierten Person und des Gesichts der unautorisierten Person im Sichtfeld, wobei das Gesicht der autorisierten Person im Sichtfeld auf einer zweiten Seite des Gesichts der unautorisierten Person detektiert wird, wobei die erste und die zweite Seite unterschiedliche Seiten des Gesichts der unautorisierten Person sind.

## Revendications

1. Système d'inscription de base de données (1) pour inscrire une personne non autorisée dans une base de données de personnes autorisées, dans lequel le système comprend :
une caméra (2) pour imager un champ de vision (6),
une unité de traitement (3) en communication avec la base de données des personnes autorisées et comprenant un sous-système de reconnaissance faciale, dans lequel la base de données contient des informations relatives aux visages de personnes autorisées,
dans lequel l'unité de traitement est configurée pour effectuer une routine d'inscription pour inscrire une personne non autorisée dans la base de données, dans lequel la routine d'inscription comprend les étapes consistant à :
détecter une scène d'initialisation, dans lequel la détection de la scène d'initialisation inclut : l'utilisation du sous-système de reconnaissance faciale pour détecter le visage (4) d'une personne autorisée (7) dans le champ de vision et pour détecter le visage (5) d'une personne non autorisée (8) dans le champ de vision, dans lequel le visage de la personne autorisée est détecté sur un premier côté du visage de la personne non autorisée dans le champ de vision ;
détecter une scène de confirmation ultérieure ; et
lorsque la scène d'initialisation et la scène de confirmation sont détectées, transmettre des informations d'inscription relatives au visage de la personne non autorisée à la base de données pour inscription en tant que personne autorisée ; **caractérisé en ce que** :
la détection de la scène de confirmation ultérieure inclut : l'utilisation du sous-système de reconnaissance faciale pour détecter le visage de la personne autorisée et le visage de la personne non autorisée dans le champ de vision, dans lequel le visage de la personne autorisée est détecté sur un second côté du visage de la personne non autorisée dans le champ de vision, les premier et second côtés étant des côtés différents du visage de la personne non autorisée.

2. Système d'inscription de base de données selon la revendication 1, dans lequel la routine d'inscription comprend une transmission des informations d'inscription à la base de données si la scène d'initialisation et la scène de confirmation sont détectées dans une limite de temps d'inscription prédéterminée.

3. Système d'inscription de base de données selon les revendications 1 ou 2, dans lequel la routine d'inscription comprend la détection d'une scène d'abandon, dans lequel la détection de la scène d'abandon inclut les étapes consistant à :
utiliser le sous-système de reconnaissance faciale pour détecter un troisième visage dans le champ de vision, et
lorsque la scène d'abandon est détectée, redémarrer la routine d'inscription.

4. Système d'inscription de base de données selon l'une quelconque des revendications précédentes, dans lequel l'unité de traitement est configurée pour détecter et suivre la personne autorisée et la personne non autorisée dans le champ de vision entre la scène d'initialisation et la scène de confirmation.

5. Système d'inscription de base de données selon l'une quelconque des revendications précédentes, dans lequel la routine d'inscription comprend les étapes consistant à :
détecter un visage en surplus dans la scène d'initialisation ou dans la scène de confirmation, et lorsque le visage en surplus est détecté, redémarrer la routine d'inscription.

6. Système d'inscription de base de données selon l'une quelconque des revendications précédentes, dans lequel le sous-système de reconnaissance faciale est configuré pour détecter de faux visages dans le champ de vision.

7. Système d'inscription de base de données selon l'une quelconque des revendications précédentes, comprenant en outre une unité d'indicateur configurée pour indiquer des instructions et/ou un état actuel du système d'inscription de base de données à la personne autorisée ou à la personne non autorisée.

8. Système d'inscription de base de données selon la revendication 8, dans lequel la routine d'inscription comprend l'utilisation de l'unité d'indicateur pour indiquer quand la scène d'initialisation est détectée et ordonner à la personne autorisée et à la personne non autorisée de changer de place.

9. Système d'inscription de base de données selon les revendications 7 ou 8, dans lequel la routine d'inscription comprend l'utilisation de l'unité d'indicateur pour indiquer lorsque la routine d'inscription est entrée dans un mode d'échec dans lequel la scène de confirmation ultérieure n'est pas détectée.

10. Système d'inscription de base de données selon l'une quelconque des revendications 7 à 9, dans lequel l'unité d'indicateur inclut un écran configuré pour afficher le champ de vision de la caméra, dans lequel des visages dans le champ de vision qui sont détectés par le sous-système de reconnaissance faciale sont affichés sur l'écran à l'intérieur d'une case.

11. Système d'inscription de base de données selon l'une quelconque des revendications 7 à 10, dans lequel la routine d'inscription comprend une demande de confirmation de l'inscription à un utilisateur lorsque la scène de confirmation est détectée.

12. Système d'inscription de base de données selon la revendication 11, comprenant en outre une interface utilisateur configurée pour recevoir des instructions d'utilisateur, dans lequel la routine d'inscription comprend : une demande de confirmation d'inscription en demandant à la personne autorisée d'entrer un mot de passe dans l'interface utilisateur, et une transmission des informations d'inscription à la base de données lorsque le mot de passe a été entré.

13. Système d'inscription de base de données selon l'une quelconque des revendications précédentes, dans lequel la routine d'inscription comprend : une détermination que la personne autorisée est ou non un administrateur autorisé à inscrire des personnes non autorisées dans la base de données, et une transmission des informations d'inscription à la base de données s'il est déterminé que la personne autorisée est un administrateur.

14. Système d'inscription de base de données selon la revendication 13, dans lequel :
la base de données comprend des informations relatives aux visages d'au moins un administrateur qui est/sont des personnes autorisées à inscrire des personnes non autorisées dans la base de données ; et
la routine d'inscription comprend : le classement du visage de la personne autorisée en tant qu'administrateur en comparant le visage de la personne autorisée aux informations de la base de données.

15. Procédé implémenté par ordinateur d'inscription d'une personne non autorisée dans une base de données de personnes autorisées en utilisant une routine d'inscription, dans lequel la routine d'inscription comprend les étapes consistant à :
recevoir une image d'un champ de vision à partir d'une caméra ;
détecter une scène d'initialisation, dans lequel la détection de la scène d'initialisation inclut : l'utilisation d'un sous-programme de reconnaissance faciale pour détecter le visage d'une personne autorisée et le visage d'une personne non autorisée dans le champ de vision, dans lequel le visage de la personne autorisée est positionné dans le champ de vision sur un premier côté du visage de la personne non autorisée ;
détecter une scène de confirmation ultérieure ; et
lorsque la scène d'initialisation et la scène de confirmation sont détectées, transmettre des informations d'inscription relatives au visage de la personne non autorisée à la base de données pour une inscription en tant que personne autorisée, **caractérisé en ce que** :
la détection de la scène de confirmation ultérieure inclut : l'utilisation du sous-programme de reconnaissance faciale pour détecter le visage de la personne autorisée et le visage de la personne non autorisée dans le champ de vision, dans lequel le visage de la personne autorisée est positionné dans le champ de vision sur un second côté du visage de la personne non autorisée, les premier et second côtés étant des côtés différents du visage de la personne non autorisée.
